# FASCICULE DE BREVET EUROPEEN

(11) **EP 2 686 182 B1**
(45) Date de publication et mention de la délivrance du brevet: **07.10.2015**
(21) Numéro de dépôt: 12714757.7
(22) Date de dépôt: 09.03.2012
(51) Int. Cl.: B60K 17/10, B60K 6/12, F15B 1/02

(54) **SYSTÈME DE MOTORISATION HYDRAULIQUE POUR VÉHICULE AUTOMOBILE**
HYDRAULISCHES ANTRIEBSSYSTEM FÜR KRAFTFAHRZEUGE
HYDRAULIC DRIVE SYSTEM FOR MOTOR VEHICLES

(30) Priorité: 15.03.2011 FR 1152125
(43) Date de publication de la demande: 22.01.2014
(73) Titulaire: Technoboost, 75116 Paris (FR)
(72) Inventeur: GIANNONI, Marc, F-75009 Paris (FR); WASCHEUL, Michael, F-78260 Acheres (FR)
(74) Mandataire: Ménès, Catherine
(86) Numéro de dépôt international: PCT/FR2012/050494
(87) Numéro de publication internationale: WO 2012/123665

(56) Documents cités:
- WO-A2-02/43980
- WO-A2-2008/049064
- FR-A1- 2 801 086
- US-A1- 2004 219 031
- US-A1- 2009 008 171
- US-A1- 2009 008 918

## Description

La présente invention concerne un système de motorisation hydraulique pour véhicule hybride, ainsi qu'un véhicule hybride équipé d'un tel système de motorisation.

Certains types de véhicules hybrides appelés hybrides série, comportent un moteur thermique formant une source d'énergie mécanique, entraînant une pompe hydraulique qui charge des accumulateurs de pression pour stocker cette énergie sous la forme de pression hydraulique.

Une machine hydraulique reliée à des roues motrices du véhicule, peut fonctionner en moteur pour délivrer une puissance mécanique aux roues en prélevant de l'énergie stockée dans les accumulateurs de pression, ou en pompe pour recharger ces accumulateurs de pression lors des freinages du véhicule, afin de récupérer au moins en partie l'énergie cinétique du véhicule.

Ce type de véhicule permet d'optimiser le fonctionnement du moteur thermique, afin de réduire sa consommation ainsi que les émissions de gaz polluants. Le stockage d'énergie hydraulique permet aussi de rouler en mode hydraulique seul sans émission de gaz polluant, appelé mode « ZEV », le moteur thermique restant à l'arrêt.

Un problème qui se pose avec les véhicules comportant une réserve de fluide sous pression, est d'intégrer des accumulateurs de pression dans le véhicule, qui comportent un volume suffisant tout en occupant peu de place.

Pour cela, il est connu de réaliser un type d'accumulateur de pression de fluide, présenté notamment par le document US-A1-2004/0219031, comportant un ensemble de formes tubulaires reliées entre elles dans un même plan qui est disposé à plat sous la caisse du véhicule, pour stocker un fluide sous pression qui est dans cet exemple de l'air comprimé. Cette disposition permet d'occuper une position sous le véhicule, qui prend peu d'espace dans l'habitacle de ce véhicule.

US 2009/0008171 A1 divulgue un système de motorisation hydraulique selon le préambule de la revendication 1.

Toutefois un problème qui se pose pour ces véhicules, est qu'il faut prévoir des canalisations de liaison entre les différents composants, notamment les accumulateurs de pression, les blocs hydrauliques haute pression de commande, appelés par la suite blocs hydrauliques HP, et les moteurs consommant cette pression, qui nécessitent des tubes comprenant des moyens de raccordement disposés aux extrémités.

Les canalisations de liaison entraînent des coûts d'achat et d'installation sur le véhicule. De plus en reliant entre eux des composants fixés séparément, qui peuvent être soumis à des vibrations, les canalisations de liaison comportent des risques de fuite ou de rupture dus notamment aux contraintes mécaniques qui s'appliquent sur les tubes et les moyens de raccordements subissant des flexions alternées.

La présente invention a notamment pour but d'éviter ces inconvénients de la technique antérieure, et de proposer un système de motorisation utilisant une pression hydraulique, permettant de maintenir et de relier ensemble de manière simple, compacte et fiable les composants dans le véhicule.

Elle propose à cet effet un système de motorisation hydraulique pour véhicule automobile, comprenant un moteur entraînant une pompe hydraulique pour recharger des accumulateurs de pression, et au moins un moteur hydraulique de traction entraînant des roues motrices du véhicule, qui est commandé par un bloc hydraulique HP relié à ces accumulateurs de pression, caractérisé en ce que les accumulateurs de pression, les blocs hydrauliques HP et les moteurs hydrauliques de traction, sont reliés directement entre eux pour former un sous-ensemble rigide.

Un avantage de ce système de motorisation hydraulique, est qu'une grande partie des composants du système de motorisation hydraulique étant fixée entre eux de manière rigide, les canalisations de liaison reliant ces composants ne sont pas soumises à des mouvements relatifs, ce qui limite les contraintes subies par ces canalisations. De plus, la fixation du sous-ensemble regroupant ces composants sur le véhicule, est simplifiée.

Le système de motorisation hydraulique selon l'invention peut de plus comporter une ou plusieurs des caractéristiques suivantes, qui peuvent être combinées entre elles.

Avantageusement, chaque bloc hydraulique HP constitue avec son moteur hydraulique, un ensemble qui est fixé à une extrémité d'un des accumulateurs de pression comportant une forme tubulaire allongée.

Avantageusement, les accumulateurs de pression comportent une forme tubulaire allongée, un accumulateur étant prévu pour être disposé longitudinalement suivant l'axe du véhicule, sous le plancher de ce véhicule, un autre accumulateur étant fixé transversalement sur ce premier accumulateur.

Avantageusement, l'accumulateur disposé longitudinalement est un accumulateur haute pression, et l'accumulateur disposé transversalement est un accumulateur basse pression.

En particulier, l'accumulateur disposé longitudinalement peut comporter un moteur hydraulique de traction fixé à chacune de ses extrémités, pour motoriser les deux essieux du véhicule.

Avantageusement, chaque moteur hydraulique de traction comporte une machine hydraulique de traction, et un différentiel d'entraînement des roues d'un essieu du véhicule.

Selon un mode de réalisation, la machine hydraulique de traction est reliée au différentiel par une boîte de vitesses.

En particulier le moteur entraînant la pompe hydraulique, peut être un moteur thermique.

L'invention a aussi pour objet un véhicule hybride utilisant une énergie hydraulique pour sa motorisation, comprenant un système de motorisation hydraulique comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'un système de motorisation hydraulique selon l'art antérieur ;
- la figure 2 est un schéma d'un système de motorisation hydraulique selon l'invention ;
- la figure 3 est un dessin en vue de dessus, d'un véhicule automobile comprenant ce système de motorisation ;
- la figure 4 est un schéma d'un système de motorisation hydraulique selon l'invention, réalisé suivant une première variante ;
- la figure 5 est un dessin d'un véhicule automobile comprenant le système de motorisation suivant cette première variante ;
- la figure 6 est un schéma d'un système de motorisation hydraulique selon l'invention, réalisé suivant une deuxième variante ; et
- la figure 7 est un dessin d'un véhicule automobile comprenant le système de motorisation suivant cette deuxième variante.

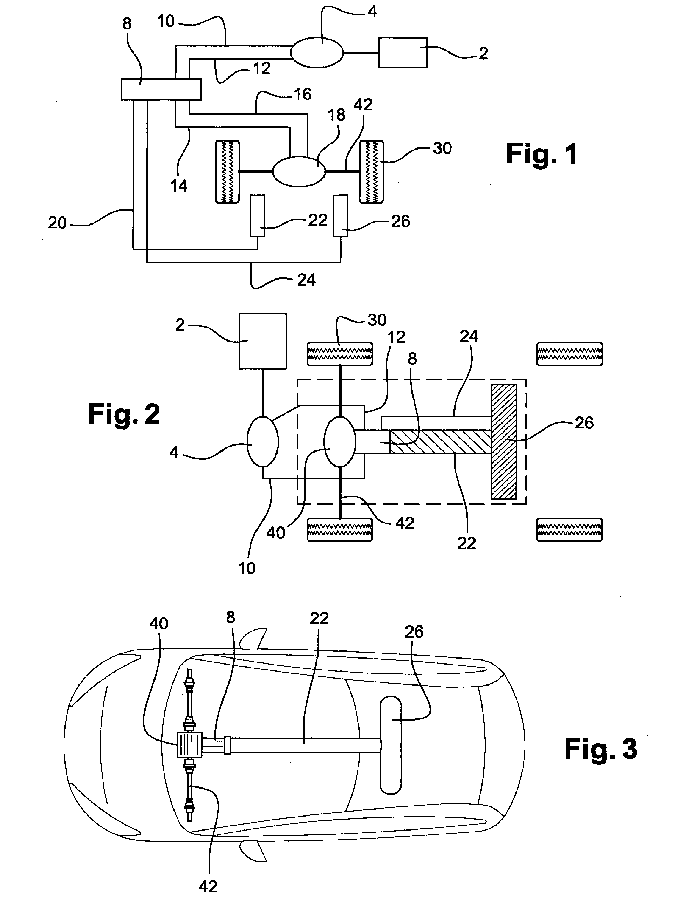

La figure 1 présente un véhicule hybride comprenant un moteur thermique 2 qui entraîne par une liaison mécanique directe, une pompe hydraulique 4 reliée par des canalisations haute pression 10 et basse pression 12, à un bloc hydraulique HP 8 de commande.

Le bloc hydraulique HP 8 est relié à un moteur hydraulique 18 pour le piloter, par des canalisations haute pression 14 et basse pression 16, cette machine entraînant les roues motrices 30 d'un même essieu du véhicule, par un différentiel qui répartit le mouvement vers ces deux roues.

Le bloc hydraulique HP 8 est relié de plus par une canalisation haute pression 20 à un accumulateur hydraulique haute pression 22, et par une canalisation basse pression 24 à un accumulateur basse pression 26.

Le fluide reste dans le circuit hydraulique qui est fermé, et passe de l'un à l'autre des accumulateurs 22, 26 en cas de charge ou de décharge, de manière à maintenir un minimum de pression dans ce circuit.

On obtient un véhicule hybride série comprenant une transmission hydrostatique, qui nécessite une fixation indépendante des principaux composants, notamment le moteur hydraulique 18, le bloc hydraulique HP 8 et les accumulateurs de pression 22, 26.

Il faut de plus relier entre eux ces différents composants avec des canalisations comportant une certaine flexibilité, en particulier si les composants sont maintenus sur le véhicule de manière légèrement souple pour absorber des vibrations, ce qui est généralement le cas pour un moteur thermique ou un moteur électrique monté sur des supports élastiques.

Ces différentes fixations ainsi que les canalisations nécessaires entraînent des coûts, et des risques plus importants de défaillance.

Les figures 2 et 3 présentent un véhicule comprenant une motorisation hybride hydrostatique comportant un mode de fonctionnement similaire à celui présenté ci-dessus, et une disposition différente des principaux composants.

Le moteur thermique 2 ainsi que sa pompe hydraulique 4, constituent un sous-ensemble fixé de manière indépendante à l'avant de la caisse du véhicule, cette pompe étant reliée par des canalisations souples 10, 12 à un bloc hydraulique HP avant 8.

Les accumulateurs de pression 22, 26 constituent chacun un tube allongé de section circulaire réduite, ce qui est favorable pour limiter les contraintes dans cet accumulateur. L'accumulateur haute pression 22 est disposé sous le plancher du véhicule, longitudinalement dans l'axe de ce véhicule, et l'accumulateur basse pression 26 fixé rigidement à l'extrémité arrière de cet accumulateur haute pression, est disposé transversalement, sensiblement sous les passagers arrière de ce véhicule.

Un moteur hydraulique avant 40, comprenant la machine hydraulique intégrée dans le différentiel qui entraîne par des arbres de roue 42 les roues avant 30 du véhicule, est fixé rigidement à l'avant du bloc hydraulique HP avant 8, qui est lui-même fixé rigidement sur l'extrémité avant de l'accumulateur haute pression 22.

Le bloc hydraulique HP avant 8 est directement relié par un conduit interne haute pression à l'accumulateur haute pression 22, et par deux conduits internes haute et basse pression, au moteur hydraulique avant 40. Ces conduits internes sont très courts, et reliant deux composants maintenus entre eux de manière rigide, ils peuvent être eux-mêmes rigides ce qui est favorable pour augmenter la fiabilité et réduire les coûts.

L'accumulateur basse pression 26 étant éloigné du bloc hydraulique HP avant 8, il est relié à ce bloc par une canalisation basse pression externe 24.

On notera qu'il est préférable de disposer par rapport au bloc hydraulique HP avant 8, l'accumulateur basse pression 26 le plus loin et l'accumulateur haute pression 22 le plus près, pour obtenir une canalisation comportant la haute pression plus courte que celle comportant la basse pression, afin de limiter les pertes de charge générées par les débits dans ces canalisations, et de réduire la masse totale de ces accumulateurs.

On obtient ainsi un sous-ensemble rigide dont les différents carters sont reliés ensemble, comprenant le différentiel d'entraînement de l'essieu avant. Le sous-ensemble est avantageusement fixé d'une pièce sous le plancher du véhicule par trois points de fixation élastiques, de manière à obtenir un montage rapide et simple de ce sous-ensemble sous le véhicule, avec un montage isostatique qui isole et filtre des vibrations.

De plus, ce sous-ensemble comprenant une forme générale en « T », comporte avantageusement une partie longitudinale disposée sous le plancher dans le tunnel longitudinal généralement prévu pour recevoir un tube d'échappement, et une partie transversale disposée dans un creux transversal généralement disponible sous les sièges des passagers arrière.

Le différentiel est dans cette version disposé entre les roues avant 30, à la place habituellement prévue pour un différentiel dans le cas d'un véhicule conventionnel comprenant un moteur thermique entraînant ces roues avant.

Selon un mode de réalisation, la machine hydraulique de traction est disposée suivant l'axe du différentiel, et comporte une série de pistons axiaux entourant le carter de ce différentiel.

Selon un autre mode de réalisation, la machine hydraulique de traction est reliée au carter du différentiel par une boîte de vitesses pour proposer différents rapports de démultiplication, et optimiser ainsi suivant les conditions de roulage, la vitesse de rotation de cette machine.

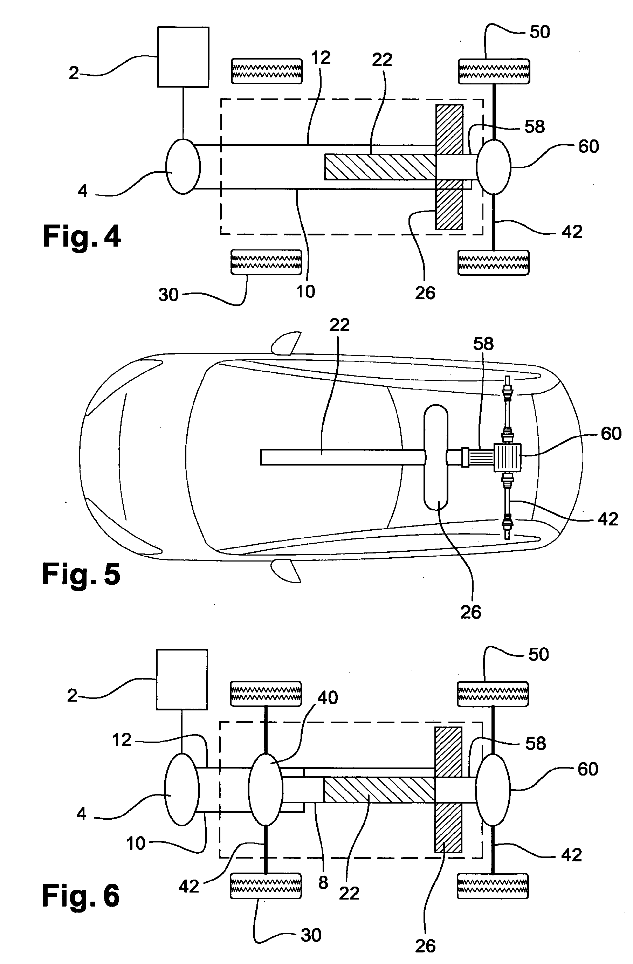

Les figures 4 et 5 présentent un véhicule comprenant une motorisation hybride hydrostatique prévue pour entraîner les roues arrière 50 du véhicule, qui comporte les différences suivantes par rapport à la motorisation présentée par les figures 2 et 3.

Le moteur thermique 2 et la pompe hydraulique 4 sont disposés de la même manière à l'avant du véhicule. La pompe hydraulique 4 est reliée par des canalisations longues et souples 10, 12, à un bloc hydraulique HP arrière 58 qui se trouve entre l'extrémité arrière de l'accumulateur longitudinal haute pression 22, et un moteur hydraulique 60 disposé sur l'essieu arrière pour motoriser les roues 50 de cet essieu.

L'accumulateur basse pression 26 est disposé dans la même position, au niveau des passagers arrière, mais il est directement raccordé au bloc hydraulique HP arrière 58 qui se trouve au même niveau.

On obtient ainsi un sous-ensemble rigide dont les différents carters sont reliés ensemble, comprenant le différentiel d'entraînement de l'essieu arrière, ce sous-ensemble étant fixé d'une pièce sous le plancher du véhicule.

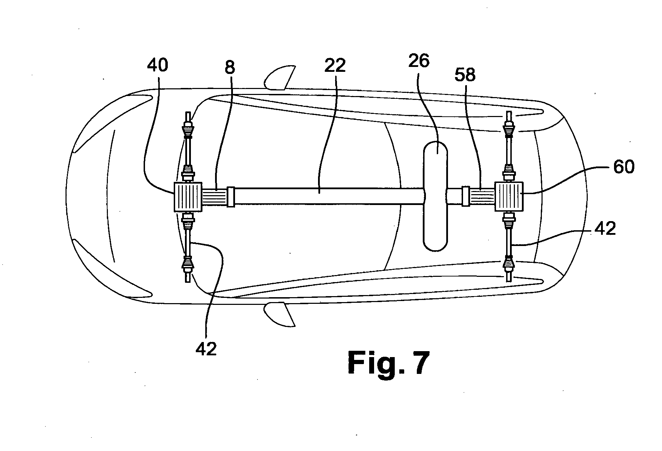

Les figures 6 et 7 présentent un véhicule comprenant une motorisation hybride hydrostatique prévue pour entraîner à la fois les roues avant 30 et arrière 50 du véhicule

Le moteur thermique 2 et la pompe hydraulique 4 sont disposés de la même manière à l'avant du véhicule. La pompe hydraulique 4 est reliée par une canalisation haute pression courte 10 au bloc hydraulique HP avant 8 qui se trouve à l'extrémité avant de l'accumulateur haute pression 22, et par une canalisation basse pression longue 12, à la fois à ce bloc hydraulique HP avant 8, et au bloc hydraulique HP arrière 58 qui se trouve à l'extrémité arrière de cet accumulateur haute pression.

La haute pression est transmise entre la pompe hydraulique 4 et le bloc hydraulique HP arrière 58, par le bloc hydraulique HP avant 8, puis au travers de l'accumulateur haute pression 22 qui relie ces deux blocs hydraulique HP et comporte une ouverture à chacune de ses extrémités.

On obtient de la même manière un sous-ensemble rigide dont les différents carters sont reliés ensemble, comprenant les deux différentiels d'entraînement de chaque essieu, ce sous-ensemble étant fixé d'une pièce sous le plancher du véhicule.

D'une manière générale, on peut prévoir un système de motorisation hydraulique modulaire, comprenant des accumulateurs de pression 22, 26 prévus pour recevoir à la demande des blocs hydraulique HP avant 8 ou arrière 58, de manière à réaliser de manière économique différentes versions de véhicules hybrides, en se fixant sous un même type de caisse.

Ces véhicules hybrides peuvent suivant les versions des motorisations hydrauliques, comporter des roues avant motrices, des roues arrière motrices, ou les quatre roues motrices pour réaliser notamment un véhicule tout terrain du type 4x4.

Dans tous les cas les liaisons hydrauliques sont simplifiées et comprennent un nombre réduit de canalisations souples, ce qui permet de limiter les coûts et d'augmenter la fiabilité.

En variante, la puissance mécanique d'entraînement de la pompe hydraulique 4 pour générer la pression hydraulique, peut être délivrée par un moteur électrique à la place du moteur thermique. Dans le cadre de l'invention, le moteur thermique ou électrique peut être monté dans le véhicule de différentes manières, notamment dans les positions suivantes, porte à faux avant, centrale avant, centrale arrière, ou porte à faux arrière.

## Revendications

1. Système de motorisation hydraulique pour véhicule automobile, comprenant un moteur (2) entraînant une pompe hydraulique (4) pour recharger des accumulateurs de pression (22, 26), et au moins un moteur hydraulique de traction (40, 60) entraînant des roues motrices (30, 50) du véhicule, qui est commandé par un bloc hydraulique HP (8, 58) relié à ces accumulateurs de pression, comprenant un sous-ensemble comportant un accumulateur haute pression (22) disposé sous le plancher du véhicule, longitudinalement dans l'axe de ce véhicule, et un accumulateur basse pression (26) fixé rigidement à l'extrémité de cet accumulateur haute pression, en étant disposé transversalement par rapport à l'accumulateur haute pression, et **caractérisé en ce que** les accumulateurs de pression (22, 26), les blocs hydrauliques HP (8, 58) et les moteurs hydrauliques de traction (40, 60), sont reliés directement entre eux pour former un sous-ensemble rigide comprenant une forme générale en « T ».

2. Système de motorisation hydraulique selon la revendication 1, **caractérisé en ce que** chaque bloc hydraulique HP (8, 58) constitue avec son moteur hydraulique (40, 60), un ensemble qui est fixé à une extrémité d'un des accumulateurs de pression (22) comportant une forme tubulaire allongée.

3. Système de motorisation hydraulique selon les revendications 1 ou 2, **caractérisé en ce que** l'accumulateur disposé longitudinalement (22), comporte un moteur hydraulique de traction (40, 60) fixé à chacune de ses extrémités, pour motoriser les deux essieux du véhicule.

4. Système de motorisation hydraulique selon l'une quelconque des revendications précédentes, **caractérisé en ce que** chaque moteur hydraulique de traction (40, 60) comporte une machine hydraulique de traction, et un différentiel d'entraînement des roues (30, 50) d'un essieu du véhicule.

5. Système de motorisation hydraulique selon la revendication 4, **caractérisé en ce que** la machine hydraulique de traction est reliée au différentiel par une boîte de vitesses.

6. Système de motorisation hydraulique selon l'une quelconque des revendications précédentes, **caractérisé en ce que** le moteur entraînant la pompe hydraulique (4), est un moteur thermique (2).

7. Véhicule hybride utilisant une énergie hydraulique pour sa motorisation, **caractérisé en ce qu'**il comporte un système de motorisation hydraulique réalisé selon l'une quelconque des revendications précédentes.

## Patentansprüche

1. Hydraulisches Antriebssystem für Kraftfahrzeug, das einen Motor (2) umfasst, der eine hydraulische Pumpe (4) zum Aufladen der Druckspeicher (22, 26) und mindestens einen hydraulischen Traktionsmotor (40, 60) umfasst, der die Antriebsräder (30, 50) des Fahrzeugs antreibt, der von einem HD-Hydraulikblock (8, 58) gesteuert wird, der mit diesen Druckspeichern verbunden ist, der eine Unterbaugruppe umfasst, die einen Hochdruckspeicher (22) umfasst, der unter dem Fußboden des Fahrzeugs längs in der Achse dieses Fahrzeugs angeordnet ist, und einen Niederdruckspeicher (26), der starr an dem Ende dieses Hochdruckhydraulikspeichers befestigt und quer in Bezug auf den Hochdruckhydraulikspeicher angeordnet ist, und **dadurch gekennzeichnet, dass** die Hochdruckspeicher (22, 26), die Hydraulikblöcke (8, 58) und die hydraulischen Traktionsmotoren (40, 60) direkt miteinander verbunden sind, um eine starre Unterbaugruppe zu bilden, die eine allgemeine "T"-Form aufweist.

2. Hydraulisches Antriebssystem nach Anspruch 1, **dadurch gekennzeichnet, dass** jeder HD-Hydraulikblock (8, 58) mit seinem Hydraulikmotor (40, 60) eine Baugruppe bildet, die an einem Ende eines der Druckspeicher (22), der eine röhrenförmige längliche Form aufweist, befestigt ist.

3. Hydraulisches Antriebssystem nach den Ansprüchen 1 oder 2, **dadurch gekennzeichnet, dass** der längs angeordnete Speicher (22) einen hydraulischen Traktionsmotor (40, 60) umfasst, der an jedem seiner Enden befestigt ist, um die zwei Achsen des Fahrzeugs anzutreiben.

4. Hydraulisches Antriebssystem nach einem der vorhergehenden Ansprüche, **dadurch gekennzeichnet, dass** jeder hydraulische Traktionsmotor (40, 60) eine hydraulische Traktionsmaschine und ein Antriebsdifferenzial der Räder (30, 50) einer Achse des Fahrzeugs umfasst.

5. Hydraulisches Antriebssystem nach Anspruch 4, **dadurch gekennzeichnet, dass** die hydraulische Traktionsmaschine mit dem Differenzial durch ein Schaltgetriebe verbunden ist.

6. Hydraulisches Antriebssystem nach einem der vorhergehenden Ansprüche, **dadurch gekennzeichnet, dass** der Motor, der die hydraulische Pumpe (4) antreibt, ein Verbrennungsmotor (2) ist.

7. Hybridfahrzeug, das eine hydraulische Energie für seinen Antrieb verwendet, **dadurch gekennzeichnet, dass** es ein hydraulisches Antriebssystem umfasst, das nach einem der vorhergehenden Ansprüche hergestellt ist.

## Claims

1. A hydraulic drive system for motor vehicles, including a motor (2) driving a hydraulic pump (4) for recharging pressure accumulators (22, 26), and at least one hydraulic traction motor (40, 60) driving drive wheels (30, 50) of the vehicle, which is controlled by a HP hydraulic power unit (8, 58) connected to said pressure accumulators, including a subassembly comprising a high pressure accumulator (22) disposed beneath the floor of the vehicle, longitudinally in the axis of this vehicle, and a low pressure accumulator (26) rigidly fixed at the end of this high pressure accumulator, and being disposed transversely with respect to the high pressure accumulator, and **characterized in that** the pressure accumulators (22, 26), the HP hydraulic power units (8, 58) and the hydraulic traction motors (40, 60) are connected directly to one another in order to form a rigid subassembly comprising a general "T" shape.

2. The hydraulic drive system according to Claim 1, **characterized in that** each HP hydraulic power unit (8, 58) constitutes with its hydraulic motor (40, 60) an assembly which is fixed to one end of one of the pressure accumulators (22) comprising an elongated tubular shape.

3. The hydraulic drive system according to Claims 1 or 2, **characterized in that** the longitudinally disposed accumulator (22) comprises a hydraulic traction motor (40, 60) fixed to each of its ends, to drive the two axles of the vehicle.

4. The hydraulic drive system according to any one of the preceding claims, **characterized in that** each hydraulic traction motor (40, 60) comprises a hydraulic traction machine, and a differential drive mechanism of the wheels (30, 50) of an axle of the vehicle.

5. The hydraulic drive system according to Claim 4, **characterized in that** the hydraulic traction machine is connected to the differential by a gearbox.

6. The hydraulic drive system according to any one of the preceding claims, **characterized in that** the motor driving the hydraulic pump (4) is a heat engine (2).

7. A hybrid vehicle using a hydraulic energy for its power, **characterized in that** it comprises a hydraulic drive system realized according to any one of the preceding claims.
